# EUROPEAN PATENT APPLICATION

(11) **EP 4 549 005 A1**
(43) Date of publication of application: **07.05.2025**
(21) Application number: 23831282.1
(22) Date of filing: 22.06.2023
(51) Int. Cl.: B01D 61/36, B01D 61/58, B01D 63/10, C07B 63/00

(54) **MEMBRANE SEPARATION DEVICE, MEMBRANE SEPARATION SYSTEM, AND METHOD FOR OPERATING MEMBRANE SEPARATION DEVICE**

(30) Priority: 28.06.2022 JP 2022103711
(71) Applicant: NITTO DENKO CORPORATION, Ibaraki-shi Osaka 567-8680 (JP)
(72) Inventor: OGAWA Tomoya, Ibaraki-shi, Osaka 567-8680 (JP); KIMURA Naomichi, Ibaraki-shi, Osaka 567-8680 (JP); NAKANO Takeshi, Ibaraki-shi, Osaka 567-8680 (JP)
(74) Representative: Hoffmann Eitle
(86) International application number: PCT/JP2023/023239
(87) International publication number: WO 2024/004838

(57) **Abstract**

The present invention provides a membrane separation device suitable for suppressing the growth of an undesirable microorganism inside the membrane separation device. The membrane separation device includes: a pervaporation membrane that separates a fermented liquid containing a volatile organic compound into a permeated fluid and a non-permeated fluid; a feed space and a permeation space separated from each other by the pervaporation membrane; a feed space inlet for supplying the fermented liquid to the feed space; and a feed space outlet for discharging the non-permeated fluid from the feed space. The feed space inlet is positioned below the feed space outlet.

## Description

### TECHNICAL FIELD

The present invention relates to a membrane separation device, a membrane separation system, and a method for operating a membrane separation device.

### BACKGROUND ART

There have been developed methods for producing a volatile organic compound (a fermented product), such as an alcohol, by fermenting a carbon source, such as glucose, by using a microorganism. The fermentation of a carbon source is carried out in an aqueous solution, for example. In this method, the fermentation by a microorganism stops in some cases when the content of the fermented product in the aqueous solution increases. In order to continue the production of the fermented product by a microorganism, it is necessary to separate the fermented product from the aqueous solution.

As an example of the method for separating a volatile organic compound from an aqueous solution containing the organic compound, a pervaporation method using a separation membrane can be mentioned. The pervaporation method is suitable for separating a volatile organic compound from an aqueous solution containing various substances. The pervaporation method also tends to be able to better suppress the amount of energy consumption and the amount of carbon dioxide emission than a distillation method. By combining a membrane separation device that performs the pervaporation method with a fermenter that produces a fermented product, it is possible to produce a fermented product continuously. For example, Patent Literature 1 discloses a membrane separation system obtained by combining a membrane separation device with a fermenter.

### CITATION LIST

### Patent Literature

Patent Literature 1: JP 2010-161987 A

### SUMMARY OF INVENTION

### Technical Problem

Conventionally, the above-mentioned pervaporation method is performed by introducing, in a horizontal direction, a fermented liquid containing a volatile organic compound to a feed space of a membrane separation device. Studies by the present inventors show that in such a conventional membrane separation device, a local dried solidified area is likely to be formed and the fermented liquid is likely to stagnate inside the membrane separation device due to a factor such as variation in the amount of an aqueous solution to be supplied to the membrane separation device. Such a defect helps an undesirable microorganism to grow inside the membrane separation device. The growth of an undesirable microorganism inside the membrane separation device causes a separation membrane to clog, lowering the separation performance of the separation membrane. This leads to a problem in the operation of the membrane separation system and makes it difficult to produce a fermented product stably.

Therefore, the present invention is intended to provide a membrane separation device suitable for suppressing the growth of an undesirable microorganism inside the membrane separation device.

### Solution to Problem

The present invention provides a membrane separation device including:
a pervaporation membrane that separates a fermented liquid containing a volatile organic compound into a permeated fluid and a non-permeated fluid;
a feed space and a permeation space separated from each other by the pervaporation membrane;
a feed space inlet for supplying the fermented liquid to the feed space; and
a feed space outlet for discharging the non-permeated fluid from the feed space, wherein
the feed space inlet is positioned below the feed space outlet.

In another aspect, the present invention provides
a membrane separation system including the membrane separation device of the present invention.

In still another aspect, the present invention provides a method for operating a membrane separation device including:
a pervaporation membrane that separates a fermented liquid containing a volatile organic compound into a permeated fluid and a non-permeated fluid;
a feed space and a permeation space separated from each other by the pervaporation membrane;
a feed space inlet for supplying the fermented liquid to the feed space; and
a feed space outlet for discharging the non-permeated fluid from the feed space,
the feed space inlet being positioned below the feed space outlet,
the method including:
   supplying the fermented liquid to the membrane separation device from the feed space inlet; and
   separating the fermented liquid into the permeated fluid and the non-permeated fluid with the pervaporation membrane.

The present invention can provide a membrane separation device suitable for suppressing the growth of an undesirable microorganism inside the membrane separation device.

### BRIEF DESCRIPTION OF DRAWINGS

FIG. 1 is a schematic cross-sectional view showing an example of a membrane separation device of the present embodiment.
FIG. 2 is a diagram for explaining a tilt angle in the membrane separation device of the present embodiment.
FIG. 3 is a schematic cross-sectional view of a pervaporation membrane included in the membrane separation device of the present embodiment.
FIG. 4A is a schematic cross-sectional view showing Modification 1 of the membrane separation device of the present embodiment.
FIG. 4B is a schematic cross-sectional view showing another example of Modification 1 of the membrane separation device of the present embodiment.
FIG. 4C is a schematic cross-sectional view showing still another example of Modification 1 of the membrane separation device of the present embodiment.
FIG. 5 is a developed perspective view showing schematically a spiral membrane element.
FIG. 6 is a schematic cross-sectional view showing Modification 2 of the membrane separation device of the present embodiment.
FIG. 7 is a schematic cross-sectional view showing Modification 3 of the membrane separation device of the present embodiment.
FIG. 8 is a schematic configuration diagram showing an example of a membrane separation system of Embodiment 1.
FIG. 9A is a schematic configuration diagram showing Modification 1 of the membrane separation system of Embodiment 1.
FIG. 9B is a schematic configuration diagram showing another example of Modification 1 of the membrane separation system of Embodiment 1.
FIG. 10 is a schematic configuration diagram showing Modification 2 of the membrane separation system of Embodiment 1.
FIG. 11 is a schematic configuration diagram showing an example of a membrane separation system of Embodiment 2.
FIG. 12 is a schematic configuration diagram showing a membrane separation device of Comparative Example 1.

### DESCRIPTION OF EMBODIMENTS

A membrane separation device according to a first aspect of the present invention includes:
a pervaporation membrane that separates a fermented liquid containing a volatile organic compound into a permeated fluid and a non-permeated fluid;
a feed space and a permeation space separated from each other by the pervaporation membrane;
a feed space inlet for supplying the fermented liquid to the feed space; and
a feed space outlet for discharging the non-permeated fluid from the feed space, wherein
the feed space inlet is positioned below the feed space outlet.

According to a second aspect of the present invention, for example, the membrane separation device according to the first aspect further includes:
a central tube having a through hole; and
a membrane leaf that has the pervaporation membrane and is wound around the central tube.

According to a third aspect of the present invention, for example, in the membrane separation device according to the second aspect,
the central tube extends from a lower side to an upper side.

According to a fourth aspect of the present invention, for example, in the membrane separation device according to any one of the first to third aspects,
a tilt angle of a virtual straight line connecting the feed space inlet to the feed space outlet with respect to a level surface is 5° or more and 90° or less.

According to a fifth aspect of the present invention, for example, the membrane separation device according to any one of the first to fourth aspects further includes
a permeation space outlet for discharging the permeated fluid from the permeation space, wherein
the permeation space outlet is positioned above the feed space inlet.

According to a sixth aspect of the present invention, for example, the membrane separation device according to any one of the first to fifth aspects further includes
a fluid discharge outlet connected to the feed space, wherein
the fluid discharge outlet is positioned below the feed space outlet.

According to a seventh aspect of the present invention, for example, in the membrane separation device according to any one of the first to sixth aspects,
a content of the organic compound in the permeated fluid is higher than a content of the organic compound in the fermented liquid.

According to an eighth aspect of the present invention, for example, in the membrane separation device according to any one of the first to seventh aspects,
the fermented liquid is separated into the permeated fluid and the non-permeated fluid in a state in which the feed space is filled with the fermented liquid.

A membrane separation system according to a ninth aspect of the present invention includes
the membrane separation device according to any one of the first to eighth aspects.

According to a tenth aspect of the present invention, for example, the membrane separation system according to the ninth aspect further includes
a tank that stores the fermented liquid to be supplied to the membrane separation device.

According to an eleventh aspect of the present invention, for example, the membrane separation system according to the tenth aspect further includes:
a fermented liquid feed passage connecting the tank to the feed space inlet; and
a non-permeated fluid discharge passage connecting the feed space outlet to the tank.

According to a twelfth aspect of the present invention, for example, in the membrane separation system according to the tenth or eleventh aspect,
the tank is a fermenter for generating the organic compound.

According to a thirteenth aspect of the present invention, for example, in the membrane separation system according to any one of the ninth to twelfth aspects,
the membrane separation system includes a plurality of the membrane separation devices, and
the plurality of the membrane separation devices are connected to each other in series or in parallel.

A method for operating a membrane separation device according to a fourteenth aspect of the present invention is a method for operating a membrane separation device including:
a pervaporation membrane that separates a fermented liquid containing a volatile organic compound into a permeated fluid and a non-permeated fluid;
a feed space and a permeation space separated from each other by the pervaporation membrane;
a feed space inlet for supplying the fermented liquid to the feed space; and
a feed space outlet for discharging the non-permeated fluid from the feed space,
the feed space inlet being positioned below the feed space outlet,
the method including:
   supplying the fermented liquid to the membrane separation device from the feed space inlet; and
   separating the fermented liquid into the permeated fluid and the non-permeated fluid with the pervaporation membrane.

The present invention will be described in detail below. The following description is not intended to limit the present invention to a specific embodiment.

### <Embodiment of membrane separation device>

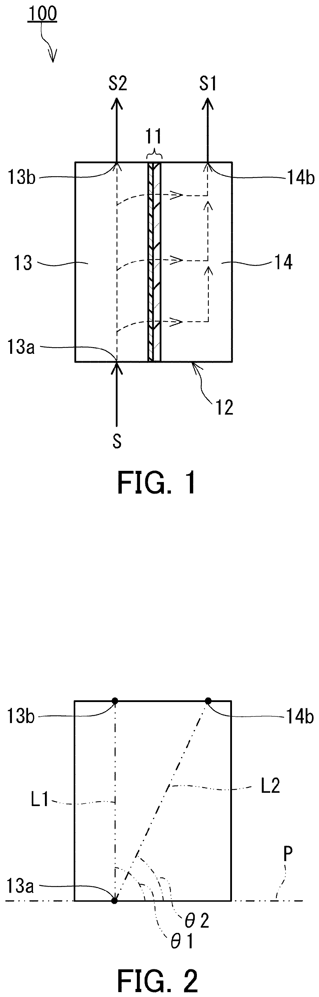

FIG. 1 is a schematic cross-sectional view showing an example of a membrane separation device 100 of the present embodiment. As shown in FIG. 1, the membrane separation device 100 includes: a pervaporation membrane 11 that separates a fermented liquid S containing a volatile organic compound into a permeated fluid S1 and a non-permeated fluid S2; a feed space 13 and a permeation space 14 separated from each other by the pervaporation membrane 11; a feed space inlet 13a for supplying the fermented liquid S to the feed space 13; and a feed space outlet 13b for discharging the non-permeated fluid S2 from the feed space 13. The feed space inlet 13a is positioned below the feed space outlet 13b. The membrane separation device 100 is a device that performs membrane separation, during its operation, for the fermented liquid S containing a volatile organic compound by using the pervaporation membrane 11.

As described above, the feed space inlet 13a is positioned below the feed space outlet 13b in the membrane separation device 100. This makes it possible to introduce the fermented liquid S to the membrane separation device 100 in such a manner that the fermented liquid S flows from a lower side to an upper side inside the membrane separation device 100. Thereby, formation of a local dried solidified area and stagnation of the fermented liquid S inside the membrane separation device 100 due to a factor such as variation in the amount of the fermented liquid S to be supplied to the membrane separation device 100 tend to be avoided. Accordingly, the growth of an undesirable microorganism inside the membrane separation device 100 is suppressed.

The membrane separation device 100 further includes a casing 12. Inside the casing 12, the feed space 13 and the permeation space 14 are provided. The feed space 13 functions as a feed space to which the fermented liquid S is supplied. The permeation space 14 functions as a permeation space to which the permeated fluid S1 is supplied. The permeated fluid S1 is obtained by allowing the fermented liquid S to permeate through the pervaporation membrane 11. The pervaporation membrane 11 is disposed inside the casing 12. Inside the casing 12, the pervaporation membrane 11 separates the feed space 13 and the permeation space 14 from each other. The pervaporation membrane 11 extends from one of a pair of wall surfaces of the casing 12 to the other.

The membrane separation device 100 further includes a permeation space outlet 14b for discharging the permeated fluid S1 from the permeation space 14. The permeation space outlet 14b may be positioned above the feed space inlet 13a. Such a configuration makes it possible to recover easily the permeated fluid S1 that is a gas and that has been discharged from the membrane separation device 100. The permeation space outlet 14b may be positioned at the same height as that of the feed space outlet 13b.

The permeation space outlet 14b may be positioned at the same height as that of the feed space inlet 13a, or may be positioned below the feed space inlet 13a. Such a configuration makes it possible to recover easily the permeated fluid S1 even when the permeated fluid S1 discharged from the membrane separation device 100 is liquefied. The permeation space outlet 14b may be positioned below the feed space outlet 13b.

The feed space 13 communicates with the feed space inlet 13a and the feed space outlet 13b. The permeation space 14 communicates with the permeation space outlet 14b. The feed space inlet 13a is an opening for supplying the fermented liquid S to the membrane separation device 100. The permeation space outlet 14b is an opening for discharging the permeated fluid S1 from the membrane separation device 100. The feed space outlet 13b is an opening for discharging, from the membrane separation device 100, the fermented liquid S (a non-permeated fluid S2) not having permeated through the pervaporation membrane 11. The feed space inlet 13a, the feed space outlet 13b, and the permeation space outlet 14b are formed, for example, in wall surfaces of the casing 12.

The feed space inlet 13a may be formed in a lower face of the casing 12, and the feed space outlet 13b and the permeation space outlet 14b may be formed in an upper face of the casing 12. The feed space inlet 13a may be formed in a side face of the casing 12. The feed space outlet 13b may be formed in the side face of the casing 12. The permeation space outlet 14b may be formed in the side face of the casing 12.

A shape of the casing 12 is not particularly limited as long as the fermented liquid S can be introduced in such a manner as to flow from the lower side to the upper side inside the membrane separation device 100. The casing 12 may have a prismatic shape or a cylindrical shape, for example. As shown in FIG. 1, in the case where the casing 12 has a longitudinal direction, the casing 12 may be placed in such a manner that the longitudinal direction extends from the lower side to the upper side. The casing 12 may be placed vertically so that the longitudinal direction is along a vertical direction.

FIG. 2 is a diagram for explaining a tilt angle in the membrane separation device 100 of the present embodiment. In the membrane separation device 100, a tilt angle of a virtual straight line L1 connecting the feed space inlet 13a to the feed space outlet 13b with respect to a level surface P is defined as θ1. Note that in the present embodiment, θ1 refers to a smallest angle between the virtual straight line L1 and the level surface P within a range from 0° or more to 90° or less. In the case where the feed space inlet 13a and the feed space outlet 13b each are a circular or rectangular opening, the virtual straight line L1 can be defined as a virtual straight line connecting a center point of the feed space inlet 13a to a center point of the feed space outlet 13b. θ1 is 5° or more and 90° or less, for example. According to such a structure, formation of a local dried solidified area and stagnation of the fermented liquid S inside the membrane separation device 100 are likely to be avoided.

θ1 may be 10° or more, 15° or more, 25° or more, 35° or more, 45° or more, 55° or more, or 65° or more. θ1 may be 75° or more and 90° or less. That is, θ1 may satisfy 75° ≤ θ1 ≤ 90°.

Furthermore, θ1 may be 80° or more, or 85° or more. θ1 may be substantially 90°. In the present description, the term "substantially 90°" means to include a deviation of ±3° or less from 90°. The same applies to other angles.

In the membrane separation device 100, a tilt angle of a virtual straight line L2 connecting the feed space inlet 13a to the permeation space outlet 14b with respect to the level surface P is defined as θ2. Note that in the present embodiment, θ2 refers to a smallest angle between the virtual straight line L2 and the level surface P within a range from 0° or more to 90° or less. In the case where the feed space inlet 13a and the permeation space outlet 14b each are a circular or rectangular opening, the virtual straight line L2 can be defined as a virtual straight line connecting the center point of the feed space inlet 13a to a center point of the permeation space outlet 14b.

θ2 may be 5° or more, 15° or more, 25° or more, or 35° or more. θ2 may be 45° or more and 90° or less. That is, θ2 may satisfy 45° ≤ θ2 ≤ 90°.

Furthermore, θ2 may be 50° or more, 55° or more, or 60° or more. The tilt angle θ2 may be substantially 75°.

The membrane separation device 100 may separate the fermented liquid S into the permeated fluid S1 and the non-permeated fluid S2 in a state in which the feed space 13 is filled with the fermented liquid S.

The membrane separation device 100 is suitable for a flow-type (continuous-type) membrane separation method. However, the membrane separation device 100 may be used for a batch-type membrane separation method.

### (Pervaporation membrane)

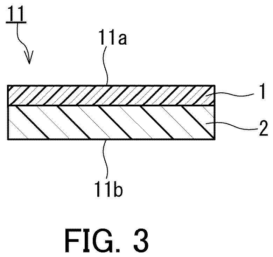

FIG. 3 is a schematic cross-sectional view of the pervaporation membrane 11 included in the membrane separation device 100. As shown in FIG. 3, the pervaporation membrane 11 includes, for example, a separation functional layer 1 and a porous support member 2 supporting the separation functional layer 1. The pervaporation membrane 11 may further include a protective layer (not shown) that protects the separation functional layer 1. The separation functional layer 1 is in direct contact with the porous support member 2, for example. For example, the pervaporation membrane 11 has a principal surface 11a, on the separation functional layer side, that is exposed to the feed space 13 and a principal surface 11b, on the porous support member side, that is exposed to the permeation space 14.

In a preferred embodiment of the present invention, the pervaporation membrane 11 is a membrane (a concentration membrane) that allows the organic compound contained in the fermented liquid S to preferentially permeate therethrough. In the case where the pervaporation membrane 11 is a concentration membrane, a content of the organic compound in the permeated fluid S1 is higher than a content of the organic compound in the fermented liquid S. In contrast, a content of the organic compound in the non-permeated fluid S2 is lower than the content of the organic compound in the fermented liquid S.

### (Separation functional layer)

In the case where the pervaporation membrane 11 is a concentration membrane, the separation functional layer 1 is a layer that allows the organic compound contained in the fermented liquid S to preferentially permeate therethrough. The separation functional layer 1 includes a hydrophobic material, for example. In the present description, the term "hydrophobic material" refers to, for example, a material that has a static contact angle exceeding 90° with respect to water when a 10 µL drop of the water (temperature 25°C) is dropped on a surface of a specimen composed of the material. Note that the static contact angle with respect to water can be measured using a commercially available contact angle meter.

Examples of the hydrophobic material include a compound having a siloxane bond (a Si-O-Si bond), an olefin-based polymer, an oil, and a fluorine-based compound. The separation functional layer 1 preferably includes a compound having a siloxane bond as the hydrophobic material. The compound having a siloxane bond is typically a silicone resin. The silicone resin may be a solid or a liquid at 25°C. Specific examples of the silicone resin include polydimethylsiloxane (PDMS). Specific examples of the olefin-based polymer include polyethylene and polypropylene. Examples of the oil include a hydrocarbon-based oil such as liquid paraffin. Examples of the fluorine-based compound include polytetrafluoroethylene (PTFE), polyvinylidene fluoride (PVDF), and tetrafluoroethylene-perfluoroalkyl vinyl ether copolymer (PFA). These hydrophobic materials can be used alone or two or more of them can be used in combination.

The separation functional layer 1 may include a silicone resin. The pervaporation membrane 11 that includes the separation functional layer 1 including a silicone resin is suitably used for concentrating the organic compound contained in the fermented liquid S.

The separation functional layer 1 may include the hydrophobic material as a main component, or may be composed substantially of the hydrophobic material alone. The term "main component" means a component having a largest content in the separation functional layer 1 in terms of weight ratio.

The separation functional layer 1 may include a matrix including the hydrophobic material and a filler dispersed in the matrix. The filler is buried in the matrix. In the matrix, all particles of the filler may be spaced from each other or may aggregate partially.

The filler includes, for example, an inorganic material such as zeolite, silica, or bentonite. The zeolite included in the filler is preferably a high-silica zeolite having a high ratio of silica with respect to alumina. Having high resistance to hydrolysis, the high-silica zeolite is suitably used for separating the aqueous solution S. Examples of the high-silica zeolite to be used include HSZ (registered trademark) available from Tosoh Corporation, HiSiv (registered trademark) available from UNION SHOWA K.K., USKY available from UNION SHOWA K.K., and Zeoal (registered trademark) available from Nakamura Choukou Co., Ltd.

The filler may include a metal organic framework (MOF). The metal organic framework is also referred to as a porous coordination polymer (PCP). The metal organic framework is preferably hydrophobic. The metal organic framework includes a metal ion and an organic ligand, for example. Examples of the metal ion include a Zn ion. The organic ligand includes an aromatic ring, for example. Examples of the aromatic ring included in the organic ligand include an imidazole ring. Examples of the organic ligand include 2-methylimidazole. Specific examples of the metal organic framework include ZIF-8.

The filler is in the form of particles, for example. The term "form of particles" herein includes spherical, elliptical, flaky, and fibrous forms. An average particle diameter of the filler is, for example, but not particularly limited to, 50 µm or less, preferably 20 µm or less, and more preferably 10 µm or less. The lower limit of the average particle diameter of the filler is 0.01 µm, for example. The average particle diameter of the filler can be determined by the following method, for example. First, a cross-section of the separation functional layer 1 is observed using a transmission electron microscope. The area of a specific particle of the filler on the resulting electron microscope image is calculated by image processing. The diameter of a circle having the same area as the calculated area is regarded as the particle diameter (the diameter of the particle) of the specific filler particle. The particle diameter was calculated for any number (at least 50) of the filler particles, and the average of the calculated values was regarded as the average particle diameter of the filler.

A content of the filler in the separation functional layer 1 that includes the matrix including the hydrophobic material is, for example, 10 wt% or more, preferably 30 wt% or more, and more preferably 40 wt% or more. The upper limit of the content of the filler in the separation functional layer 1 is, for example, but not particularly limited to, 70 wt%. A content of the matrix in the separation functional layer 1 is, for example, but not particularly limited to, 30 wt% to 90 wt%.

The separation functional layer 1 has a thickness of, for example, 200 µm or less, preferably 100 µm or less, and more preferably 80 µm or less. The separation functional layer 1 may have a thickness of 1.0 µm or more, 10 µm or more, or 30 µm or more.

The separation functional layer 1 may have a microporous structure with an average pore diameter of less than 0.01 µm, but may be a dense layer having no pore on its surface.

### (Porous support member)

Examples of the porous support member 2 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 2 may be a combination of two or more of these materials.

The porous support member 2 has an average pore diameter of 0.01 to 0.4 µm, for example. A thickness of the porous support 2 is, for example, but not particularly limited to, 10 µm or more, preferably 50 µm or more, and more preferably 100 µm or more. The thickness of the porous support 2 is, for example, 300 µm or less, and preferably 200 µm or less.

### (Protective layer)

The protective layer covers a surface of the separation functional layer 1, for example. A material of the protective layer is, for example, but not particularly limited to, a silicone resin. The material of the protective layer may be the same as or different from that of the matrix of the separation functional layer 1. A thickness of the protective layer is, for example, but not particularly limited to, 0.5 µm or more, preferably 1 µm or more, more preferably 5 µm or more, and still more preferably 10 µm or more. The thickness of the protective layer is, for example, 100 µm or less, preferably 50 µm or less, and more preferably 30 µm or less.

### (Method for producing pervaporation membrane)

The pervaporation membrane 11 can be produced by, for example, forming the separation functional layer 1 on the porous support member 2. Specifically, a coating liquid containing the materials of the separation functional layer 1 is prepared first. The coating liquid may contain, in addition to the filler, a dispersant for dispersing the filler in the coating liquid. For example, in the case where the coating liquid contains the compound having a siloxane bond, the coating liquid may further contain a catalyst for curing the compound. Next, the coating liquid is applied onto the porous support 2 to obtain a coating. The coating is dried to obtain the separation functional layer 1. Thus, the pervaporation membrane 11 can be obtained.

In another preferred embodiment of the present invention, the pervaporation membrane 11 is a membrane (a dehydration membrane) that allows water contained in the fermented liquid S to preferentially permeate therethrough. In the case where the pervaporation membrane 11 is a dehydration membrane, the content of the organic compound in the permeated fluid S1 is lower than the content of the organic compound in the fermented liquid S. In contrast, the content of the organic compound in the non-permeated fluid S2 is higher than the content of the organic compound in the fermented liquid S.

### (Separation functional layer)

In the case where the pervaporation membrane 11 is a dehydration membrane, the separation functional layer 1 is a layer that allows water contained in the fermented liquid S to preferentially permeate therethrough. The separation functional layer 1 may include at least one selected from the group consisting of polyimide and zeolite. Zeolite has high hydrophilicity. Polyimide is a material that can better suppress swelling with water than zeolite. Specific examples of the zeolite include crystalline silicate such as silicalite-1 or silicalite-2, and crystalline titanosilicate such as TS-1. The pervaporation membrane 11 that includes the separation functional layer 1 including at least one selected from the group consisting of polyimide and zeolite is suitable for removing water contained in the fermented liquid S, that is, suitably used for dehydration.

The separation functional layer 1 may include polyimide as a main component, or may be composed substantially of polyimide alone. The separation functional layer 1 may include zeolite as a main component, or may be composed substantially of zeolite alone.

The separation functional layer 1 may include a matrix including at least one selected from the group consisting of polyimide and zeolite, and a filler dispersed in the matrix. The filler is buried in the matrix. In the matrix, all particles of the filler may be spaced from each other or may aggregate partially. As the filler, the one mentioned as usable for the separation functional layer 1 in the case where the pervaporation membrane 11 is a concentration membrane can be used.

A content of the filler in the separation functional layer 1 that includes the matrix including at least one selected from the group consisting of polyimide and zeolite is, for example, 10 wt% or more, preferably 30 wt% or more, and more preferably 40 wt% or more. The upper limit of the content of the filler in the separation functional layer 1 is, for example, but not particularly limited to, 70 wt%. A content of the matrix in the separation functional layer 1 is, for example, but not particularly limited to, 30 wt% to 90 wt%.

The separation functional layer 1 has a thickness of, for example, 200 µm or less, preferably 100 µm or less, and more preferably 80 µm or less. The separation functional layer 1 may have a thickness of 1.0 µm or more, 10 µm or more, and 30 µm or more.

The separation functional layer 1 may have a microporous structure with an average pore diameter of less than 0.01 µm, but may be a dense layer having no pore on its surface.

### (Porous support member)

As the porous support member 2, the one mentioned as the porous support member 2 in the case where the pervaporation membrane 11 is a concentration membrane can be used.

### (Protective layer)

As the protective layer, the one mentioned as the protective layer in the case where the pervaporation membrane 11 is a concentration membrane can be used.

### (Method for producing pervaporation membrane)

The pervaporation membrane 11 can be produced by the same method as that used in the case where the pervaporation membrane 11 is a concentration membrane.

### [Method for operating membrane separation device]

A method for operating the membrane separation device 100 includes: supplying the fermented liquid S to the membrane separation device 100 from the feed space inlet 13a; and separating the fermented liquid S into the permeated fluid S1 and the non-permeated fluid S2 with the pervaporation membrane 11. According to the method for operating the membrane separation device 100, formation of a local dried solidified area and stagnation of the fermented liquid S inside the membrane separation device 100 due to a factor such as variation in the amount of the fermented liquid S to be supplied to the membrane separation device 100 are avoided. Accordingly, the growth of an undesirable microorganism inside the membrane separation device 100 is suppressed.

Specifically, the method for operating the membrane separation device 100 is carried out as follows, for example. First, the fermented liquid S is supplied to the feed space 13 of the membrane separation device 100 from the lower side to the upper side via the feed space inlet 13a positioned below the feed space outlet 13b. This makes it possible to bring the fermented liquid S into contact with one surface (the principal surface 11a, for example) of the pervaporation membrane 11.

The fermented liquid S contains, for example, the organic compound as a fermented product, and water. The organic compound contained in the fermented liquid S is not particularly limited as long as the organic compound has volatility. In the present description, the term "organic compound having volatility" refers to an organic compound that has a boiling point of 20 to 260°C, preferably 50°C to 260°C, under an atmospheric pressure (101.325 kPa). Note that the organic compound allows, for example, an aqueous phase containing water as a main component and an organic phase having a content of the organic compound higher than that in the aqueous phase to be generated when a concentration of the organic compound is high in the aqueous solution.

The number of carbon atoms in the organic compound is, for example, but not particularly limited to, 10 or less, and may be 8 or less, 6 or less, or even 4 or less. The lower limit of the number of carbon atoms in the organic compound may be 1 or 2. The organic compound has, for example, a functional group including an oxygen atom, such as a hydroxyl group, a carbonyl group, an ether group, and an ester group. In the organic compound, the number of the functional groups including an oxygen atom is typically one.

Examples of the organic compound include an alcohol, ketone, and ester. In the case where the organic compound is an alcohol, the organic compound is likely to be compatible with water and thus unlikely to cause unevenness in an environment in its system. The alcohol may be an alkyl alcohol composed only of an alkyl group and a hydroxyl group, or may be an aryl alcohol including an aryl group and a hydroxyl group. The alkyl alcohol may be linear, branched, or cyclic. Examples of the alkyl alcohol as the organic compound include methanol, ethanol, n-propanol, isopropanol, n-butanol (BuOH), 2-butanol, isobutanol, t-butanol, and n-pentanol, and preferred is n-butanol. N-butanol is a compound that allows two phases (an aqueous phase and an organic phase) to be generated from an aqueous solution thereof when a content of the compound in the aqueous solution is around 8 wt% or more. Therefore, in the case where the organic compound is n-butanol, it is possible, by adjusting the content of the organic compound in the permeated fluid to be around 8 wt% or more, for example, to generate an aqueous phase and an organic phase in the permeated fluid after the permeated fluid is liquefied. In this case, it is possible to refine the permeated fluid easily by separating the aqueous phase and the organic phase from each other. Examples of the aryl alcohol include phenol.

The ketone may be dialkylketone composed only of an alkyl group and a carbonyl group. Examples of the dialkylketone as the organic compound include methyl ethyl ketone (MEK) and acetone.

The ester may be aliphatic alkylester composed only of an alkyl group and an ester group. Examples of the aliphatic alkylester include ethyl acetate.

Note that the organic compound is not limited to those mentioned above. The organic compound may be aromatic hydrocarbon such as benzene, toluene, or xylene.

The fermented liquid S may contain one kind of the organic compound, or two or more kinds of the organic compounds. The content of the organic compound in the fermented liquid S is, for example, 50 wt% or less, and may be 30 wt% or less, 10 wt% or less, 5 wt% or less, 2 wt% or less, or even 1 wt% or less. The lower limit of the content of the organic compound is, for example, but not particularly limited to, 0.01 wt%.

In the present embodiment, the organic compound is a fermented product generated by fermentation of a carbon source by a microorganism. That is, in the present embodiment, the fermented liquid S is a fermented liquid containing the organic compound as the fermented product.

The fermented liquid S may further contain, other than water and the organic compound, an additional component, such as a microorganism associated with the generation of the fermented product, a carbon source, a nitrogen source, or an inorganic ion. The microorganism associated with the generation of the fermented product is typically a bacterium. Examples of the carbon source include polysaccharides such as starch, and monosaccharides such as glucose.

The amount of the fermented liquid S to be supplied to the membrane separation device 100 is not particularly limited and is determined according to the processing capacity of the membrane separation device 100. The fermented liquid S to be supplied to the feed space 13 may be heated in advance. In one example, the fermented liquid S to be supplied to the feed space 13 has a temperature of 15°C to 75°C.

Next, in a state in which the fermented liquid S is in contact with one surface of the pervaporation membrane 11, a space adjacent to another surface (the principal surface 11b, for example) of the pervaporation membrane 11 is decompressed. Specifically, an inside of the permeation space 14 is decompressed via the permeation space outlet 14b. The inside of the permeation space 14 can be decompressed by, for example, a decompression device such as a vacuum pump. A pressure in the permeation space 14 is, for example, 50 kPa or less, and may be 20 kPa or less, 10 kPa or less, 5 kPa or less, 3 kPa or less, or even 2 kPa or less. In the present description, the term "pressure" means an absolute pressure unless otherwise noted.

For example, in the case where the pervaporation membrane 11 is a concentration membrane, decompressing the inside of the permeation space 14 makes it possible to obtain, on the side of the other surface of the pervaporation membrane 11, the permeated fluid S1 having a high content of the organic compound. In other words, the permeated fluid S1 is supplied to the permeation space 14. The permeated fluid S1 is discharged outside the membrane separation device 100 via the permeation space outlet 14b. The permeated fluid S1 that is a gas is cooled in a condensation unit, etc., for example. Thereby, the permeated fluid S1 is liquefied to obtain the permeated fluid S1 that is a liquid.

Meanwhile, in the case where the pervaporation membrane 11 is a concentration membrane, the content of the organic compound in the fermented liquid S gradually decreases from the feed space inlet 13a toward the feed space outlet 13b in the feed space 13. The fermented liquid S (the non-permeated fluid S2) processed in the feed space 13 is discharged outside the first membrane separation device 100 via the feed space outlet 13b. The non-permeated fluid S2 is typically a liquid.

As described above, in the case where the pervaporation membrane 11 is a concentration membrane, the pervaporation membrane 11 of the membrane separation device 100 allows the organic compound contained in the fermented liquid S to preferentially permeate therethrough. Accordingly, the permeated fluid S1 obtained by the operation of the membrane separation device 100 has a content of the organic compound higher than that in the fermented liquid S to be supplied to the membrane separation device 100.

A washing operation for the membrane separation device 100 may be executed after the operation of membrane separation is executed for a certain period of time according to the above method for operating the membrane separation device 100. The washing operation for the membrane separation device 100 may be executed regularly.

The operating method of the present embodiment makes it possible, for example, to produce the permeated fluid S1 having a high content of the organic compound. In other words, the operating method of the present embodiment makes it possible to produce the organic compound as the permeated fluid S1.

In another aspect, the present invention provides a method for producing an organic compound, including:
supplying the fermented liquid S containing the volatile organic compound to the membrane separation device 100 having the pervaporation membrane 11;
separating the fermented liquid S into the permeated fluid S1 and the non-permeated fluid S2 with the pervaporation membrane 11; and
recovering the permeated fluid S1, wherein
the content of the organic compound in the permeated fluid S1 is higher than the content of the organic compound in the fermented liquid S,
the membrane separation device 100 includes:
   the feed space 13 and the permeation space 14 separated from each other by the pervaporation membrane 11;
   the feed space inlet 13a for supplying the fermented liquid S to the feed space 13; and
   the feed space outlet 13b for discharging the non-permeated fluid S2 from the feed space 13, and
   the feed space inlet 13a is positioned below the feed space outlet 13b.

### <Modification of membrane separation device>

### (Modification 1)

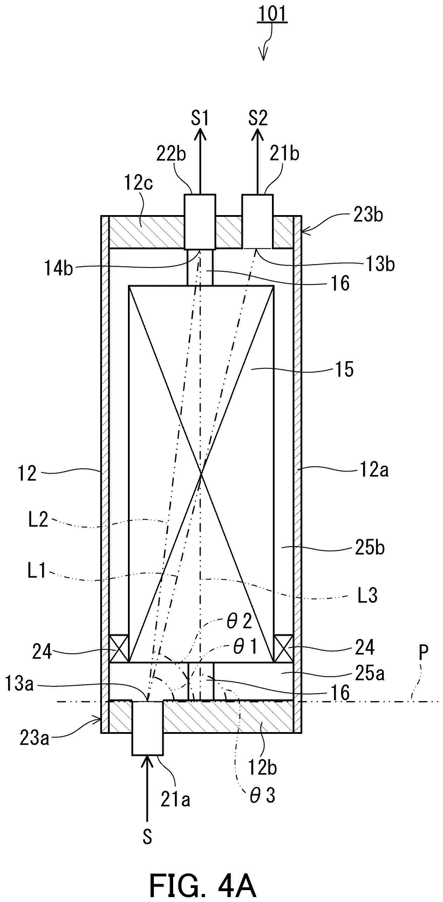

FIG. 4A is a schematic cross-sectional view showing Modification 1 of the membrane separation device 100 of the present embodiment. A membrane separation device 101 of Modification 1 includes a membrane element 15 having the pervaporation membrane 11. The membrane element 15 is disposed inside the casing 12. The feed space inlet 13a is positioned below the feed space outlet 13b.

The membrane element 15 may be a spiral membrane element, a hollow fiber membrane element, a disk tube membrane element in which a plurality of pervaporation membranes are laminated, a plate-and-flame membrane element, or the like. The membrane element 15 is typically a spiral membrane element. FIG. 4A shows an example in the case where the membrane element 15 is a spiral membrane element.

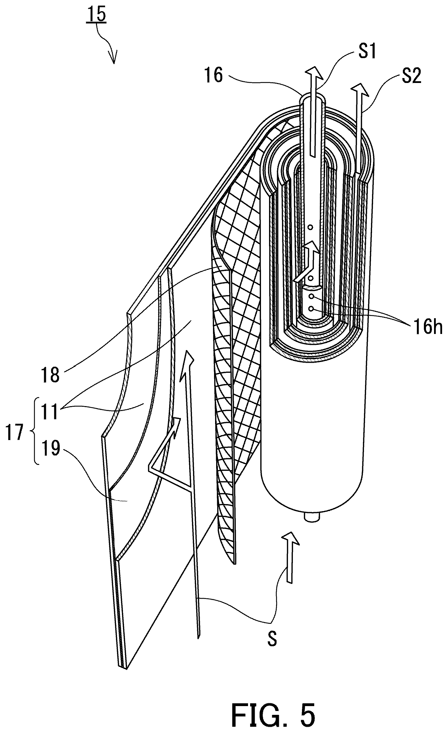

FIG. 5 is a developed perspective view showing schematically a spiral membrane element. The membrane element 15 may be a spiral membrane element as shown in FIG. 5. The spiral membrane element 15 in FIG. 5 has a central tube 16 and the pervaporation membrane 11, and includes a membrane leaf 17 that is wound around the central tube 16. The central tube 16 extends from the lower side to the upper side. The central tube 16 may extend in the vertical direction.

The central tube 16 has a cylindrical shape. The central tube 16 has a surface with a through hole 16h formed therein to allow the permeated fluid S1 to flow into the central tube 16. The number of the through holes 16h is not particularly limited and may be one, or two or more. Examples of a material of the central tube 16 include: a resin such as an acrylonitrile-butadiene-styrene copolymer resin (an ABS resin), a polyphenylene ether resin (a PPE resin), or a polysulfone resin (a PSF resin); and a metal such as stainless steel or titanium. The central tube 16 has an inner diameter in a range of, for example, 20 to 100 mm.

The membrane element 15 has a plurality of the membrane leaves 17. Each of the membrane leaves 17 further includes the pervaporation membrane 11 and a permeation-side flow passage material 19. For example, each of the membrane leaves 17 has two pieces of the pervaporation membranes 11. The two pieces of the pervaporation membranes 11 are stacked with each other and sealed on three sides in such a manner as to have a bag-like structure. The permeation-side flow passage material 19 is disposed between the two pieces of the pervaporation membranes 11 in such a manner as to be positioned inside the bag-like structure. The permeation-side flow passage material 19 secures, between the two pieces of the pervaporation membranes 11, a space (a permeation space) serving as a flow passage for the permeated fluid S1. As just described above, the permeation-side flow passage material 19 is combined with the pervaporation membrane 11 and used. The number of the membrane leaves 17 is, for example, but not particularly limited to, 2 to 30.

The membrane element 15 further has a feed-side flow passage material 18. The feed-side flow passage material 18 is positioned outside the above-mentioned bag-like structure and is laminated on the membrane leaf 17. Specifically, a plurality of the feed-side flow passage materials 18 and a plurality of the membrane leaves 17 are laminated alternately. The feed-side flow passage material 18 secures, between the membrane leaf 17 and the membrane leaf 17, a space (a feed space) serving as a flow passage for the fermented liquid S.

As the feed-side flow passage material 18 and the permeation-side flow passage material 19, a resin net, woven fabric, or knitted fabric composed of polyethylene, polypropylene, polyethylene terephthalate (PET), polyphenylene sulfide (PPS), or an ethylene-chlorotrifluoroethylene copolymer (ECTFE) can be used, for example.

As shown in FIG. 4A, the casing 12 has a casing main body 12a, a first end plate 12b, and a second end plate 12c. The casing main body 12a has a cylindrical shape and is made from a material having sufficient pressure resistance. The first end plate 12b is attached to a lower-side end portion 23a of the casing 12. The end portion 23a of the casing 12 is closed with the first end plate 12b. The second end plate 12c is attached to an upper-side end portion 23b of the casing 12. The end portion 23b of the casing 12 is closed with the second end plate 12c.

The casing 12 has a port 21a, a port 21b, and a port 22b. These ports are ports for allowing an inside of the casing 12 to communicate with an outside of the casing 12. The port 21a is provided at the lower-side end portion 23a of the casing 12. The port 21b and the port 22b are provided at the upper-side end portion 23b of the casing 12.

The port 21a may be provided to the first end plate 12b, and the port 22b may be provided to the second end plate 12c. The port 21b and the port 22b may be provided to the second end plate 12c.

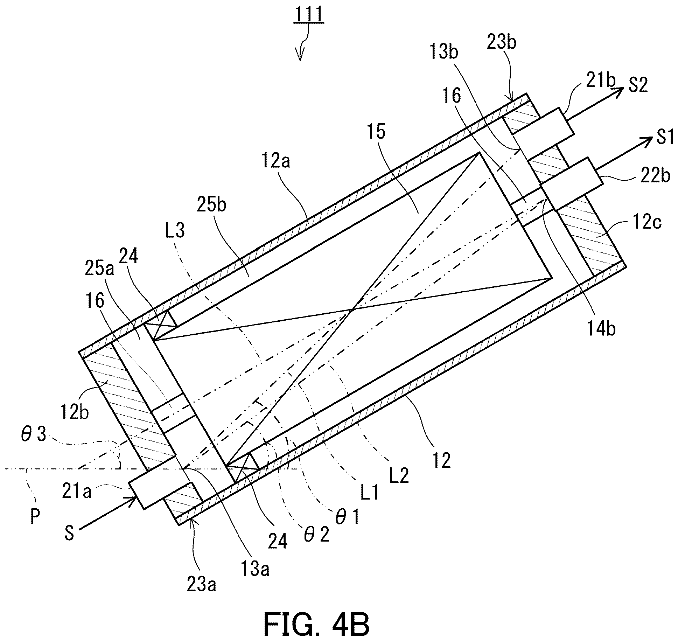

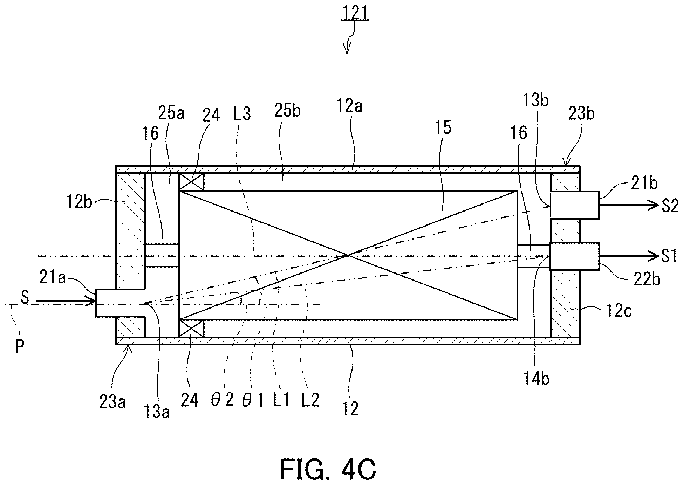

The feed space inlet 13a communicates with the port 21a, and the port 21a is used as an inlet for the fermented liquid S. The central tube 16 is connected to the port 22b at the permeation space outlet 14b. That is, the port 22b is used as an outlet for the permeated fluid S1. The feed space outlet 13b communicates with the port 21b, and the port 21b is used as an outlet for the non-permeated fluid S2. Each of the ports may be a simple opening, or a nozzle-like opening as shown in FIG. 4.

The membrane separation device 101 further includes a sealing member 24 disposed in a space between the membrane element 15 and the casing 12. For example, the sealing member 24 has a ring shape and surrounds the membrane element 15 in a circumferential direction. The sealing member 24 is disposed on a lower end side of the membrane element 15. The sealing member 24 divides an inner space of the casing 12 into a space 25a and a space 25b. The space 25a is positioned below the space 25b.

In the case where the membrane element 15 is a spiral membrane element as shown in FIG. 5, a tilt angle of a center axis L3 of the membrane element 15 with respect to the level surface P is defined as θ3. Note that in the present embodiment, θ3 refers to a smallest angle between the center axis L3 and the level surface P within a range from 0° or more to 90° or less. As shown in FIG. 4A, the center axis L3 can be defined as a center axis of the central tube 16.

θ3 may be 5° or more, 15° or more, 25° or more, or 35° or more. θ3 may be 45° or more and 90° or less. That is, θ3 may satisfy 45° ≤ θ3 ≤ 90°. According to such a structure, formation of a local dried solidified area and stagnation of the fermented liquid S inside the membrane separation device 100 are likely to be avoided.

Furthermore, θ3 may be 50° or more, 55° or more, 60° or more, 65° or more, or 70° or more.

In the membrane separation device 101 shown in FIG. 4A, θ1 is 35° or more and 90° or less. As shown in FIG. 4A, θ1 may satisfy 35° ≤ θ1 ≤ 90°.

In the membrane separation device 101 shown in FIG. 4A, θ2 is 55° or more and 90° or less. As shown in FIG. 4A, θ2 may satisfy 55° ≤ θ2 ≤ 90°.

In the membrane separation device 101 shown in FIG. 4A, θ3 is substantially 90°. As shown in FIG. 4A, θ3 may be substantially 90°.

In the membrane separation device 101, θ1 may satisfy 35°≤ θ1 ≤ 90° and θ3 may be substantially 90°.

In the membrane separation device 101, an end portion member, which is not shown, may be attached to one end or each of both ends, in an axial direction, of the membrane element 15. The end portion member is also referred to as a telescope prevention member, an anti-telescope material, and the like. In this case, the sealing member 24 is provided via the end portion member disposed at an upstream-side end portion of the membrane element 15.

In the membrane separation device 101, the membrane element 15 may have a diameter of 8 inches (approximately 201 mm) or less. The membrane separation device 101 including the membrane element 15 in such a size has excellent transportability.

In the case where the membrane element 15 is a spiral membrane element as shown in FIG. 5, a method for operating the membrane separation device 101 is carried out as follows, for example. First, the fermented liquid S is supplied from the port 21a (the feed space inlet 13a), and a space inside the central tube 16 is decompressed. The permeated fluid S1 having permeated through the pervaporation membrane 11 of the membrane leaf 17 thereby moves into the central tube 16. The permeated fluid S1 is discharged outside from the port 22b (the permeation space outlet 14b) via the central tube 16. The fermented liquid S (the non-permeated fluid S2) processed by the membrane element 15 is discharged outside from the port 21b (the feed space outlet 13b).

FIG. 4B is a schematic cross-sectional view showing another example of Modification 1. A membrane separation device 111 shown in FIG. 4B has the same configuration as that of the membrane separation device 101 shown in FIG. 4A, except that the tilt angles (θ1, θ2, 83) are different. Therefore, the elements common between the membrane separation device 101 and the membrane separation device 111 are denoted by the same reference numerals, and the description of such elements may be omitted.

In the membrane separation device 111 shown in FIG. 4B, the tilt angle θ1 of the virtual straight line L1 connecting the feed space inlet 13a to the feed space outlet 13b with respect to the level surface P is more than 0° and less than 90°. As shown in FIG. 4B, θ1 may satisfy 0° < θ1 < 90°. According to such a structure, formation of a local dried solidified area and stagnation of the fermented liquid S inside the membrane separation device 111 are more likely to be avoided.

In the membrane separation device 111 shown in FIG. 4B, the tilt angle θ2 of the virtual straight line L2 connecting the feed space inlet 13a to the permeation space outlet 14b with respect to the level surface P is more than 0° and less than 90°. As shown in FIG. 4B, θ2 may satisfy 0° < θ2 < 90°.

In the membrane separation device 111 shown in FIG. 4B, 81 and θ2 may satisfy θ1 > θ2. In the case where θ1 > θ2 is satisfied, the feed space outlet 13b is positioned above the permeation space outlet 14b. According to such a structure, formation of a local dried solidified area and stagnation of the fermented liquid S inside the membrane separation device 100 are likely to be avoided.

In the membrane separation device 111 shown in FIG. 4B, the tilt angle θ3 of the center axis L3 of the membrane element 15 with respect to the level surface P is more than 0° and less than 90°. As shown in FIG. 4B, θ3 may satisfy 0° < θ3 < 90°.

FIG. 4C is a schematic cross-sectional view showing still another example of Modification 1. A membrane separation device 121 shown in FIG. 4C has the same configuration as that of the membrane separation device 101 shown in FIG. 4A, except that the tilt angles (θ1, θ2, 83) are different. Therefore, the elements common between the membrane separation device 101 and the membrane separation device 121 are denoted by the same reference numerals, and the description of such elements may be omitted.

In the membrane separation device 121 shown in FIG. 4C, the tilt angle θ1 of the virtual straight line L1 connecting the feed space inlet 13a to the feed space outlet 13b with respect to the level surface P is more than 0° and 55° or less. As shown in FIG. 4C, θ1 may satisfy 0° < θ1 ≤ 55°. According to such a structure, formation of a local dried solidified area and stagnation of the fermented liquid S inside the membrane separation device 121 are also avoided to a certain extent.

In the membrane separation device 121 shown in FIG. 4C, the tilt angle θ2 of the virtual straight line L2 connecting the feed space inlet 13a to the permeation space outlet 14b with respect to the level surface P is 0° or more and 35° or less. As shown in FIG. 4C, θ2 may satisfy 0° ≤ θ2 ≤ 35°.

In the membrane separation device 121 shown in FIG. 4C, the tilt angle θ3 of the center axis L3 of the membrane element 15 with respect to the level surface P is substantially 0°. As shown in FIG. 4C, θ3 may be substantially 0°.

Each membrane separation device of the present embodiment mentioned above may be used in such a manner that a plurality thereof are connected to each other in series. In the case where the plurality of the membrane separation devices are connected to each other in series and used, the membrane separation device 111 shown in FIG. 4B and the membrane separation device 121 shown in FIG. 4C are more practical than the membrane separation device 101 shown in FIG. 4A in that they are easy to connect and install. The membrane separation device 121 shown in FIG. 4C is even easier to connect and install than the membrane separation device 111 shown in FIG. 4B. Meanwhile, the membrane separation device 101 shown in FIG. 4A and the membrane separation device 111 shown in FIG. 4B can charge a larger amount of a liquid into the membrane element and better suppress an increase of the local dried solidified area inside the membrane separation device than the membrane separation device 121 shown in FIG. 4C. The membrane separation device 101 shown in FIG. 4A can charge an even larger amount of a liquid into the membrane element than the membrane separation device 111 shown in FIG. 4B. That is, the membrane separation device 101 shown in FIG. 4A is highly effective in suppressing an increase of the local dried solidified area inside the membrane separation device. The membrane separation device 121 shown in FIG. 4C is highly practical. The membrane separation device 111 shown in FIG. 4B has an excellent balance between the practicality and the effectiveness in suppressing an increase of the local dried solidified area inside the membrane separation device.

The membrane separation devices of the present embodiment mentioned above can also be used in combination and connected to each other in series.

### (Modification 2)

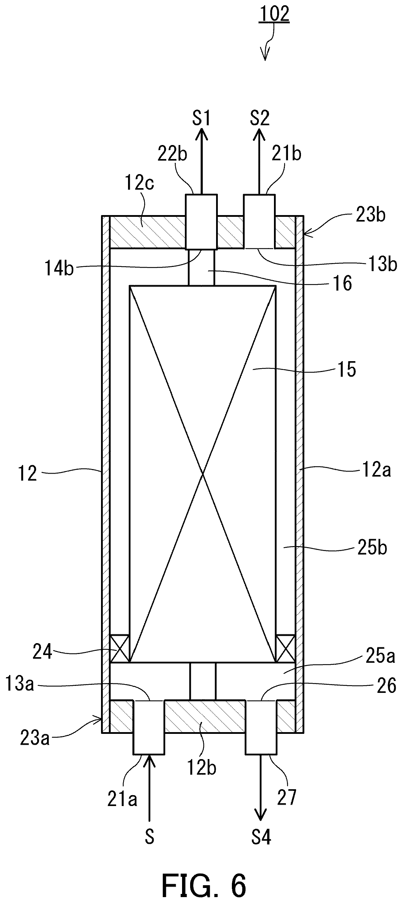

FIG. 6 is a schematic cross-sectional view showing Modification 2 of the membrane separation device 100 of the present embodiment. A membrane separation device 102 of Modification 2 has the same configuration as that of the membrane separation device 101 of Modification 1, except that the membrane separation device 102 further includes a fluid discharge outlet 26 connected to the feed space 13 and the fluid discharge outlet 26 is positioned below the feed space outlet 13b. Therefore, the elements common between the above-mentioned membrane separation device 101 and the membrane separation device 102 of Modification 2 are denoted by the same reference numerals, and the description of such elements may be omitted.

A fluid S4 flows into the inner space (especially the space 25a) of the casing 12 and stagnates therein in some cases. The fluid S4 is, for example, a washing liquid used at the time of washing the membrane separation device 102. The membrane separation device 102 can discharge the above fluid S4 from the fluid discharge outlet 26. During operation, it is also possible to discharge the fermented liquid S, etc. stagnated in the inner space of the casing 12 from the discharge outlet 26 as necessary.

In the case where the membrane element 15 included in the membrane separation device 102 is a spiral membrane element as shown in FIG. 5, the fluid discharge outlet 26 may be positioned on the same side as that the feed space inlet 13a is on with respect to an axial direction of the central tube 16. As shown in FIG. 6, both of the fluid discharge outlet 26 and the feed space inlet 13a may be provided to the first end plate 12b.

The casing 12 further has a port 27. The port 27 is a port for allowing the inside of the casing 12 to communicate with the outside of the casing 12. The port 27 is provided at the lower-side end portion 23a of the casing 12. The port 27 may be provided to the second end plate 12b.

The fluid discharge outlet 26 communicates with the port 27, and the port 27 is used as an outlet for the fluid S4. The port 27 may be a simple opening, or a nozzle-like opening as shown in FIG. 6.

FIG. 6 is an example in the case where the fluid discharge outlet 25 is provided in addition to the permeation space outlet 13a. However, the permeation space outlet 13a may also serve as the fluid discharge outlet 25. That is, the configuration may be made in such a manner that the fluid S4 can be discharged from the permeation space outlet 13a.

### (Modification 3)

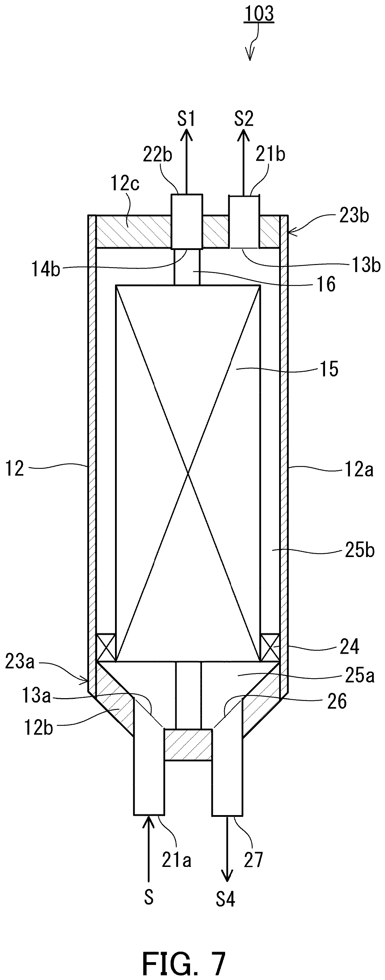

FIG. 7 is a schematic cross-sectional view showing Modification 3 of the membrane separation device 100 of the present embodiment. A membrane separation device 103 of Modification 3 has the same configuration as that of the membrane separation device 102 of Modification 2, except that the first end plate 12b of the casing 12 has a cone shape or a truncated cone shape protruding toward the outside of the casing 12. Therefore, the elements common between the above-mentioned membrane separation device 102 and the membrane separation device 103 of Modification 3 are denoted by the same reference numerals, and the description of such elements may be omitted.

The membrane separation device 103 makes it easy for the fluid S4 to be discharged from the fluid discharge outlet 26.

### <Embodiment 1 of membrane separation system>

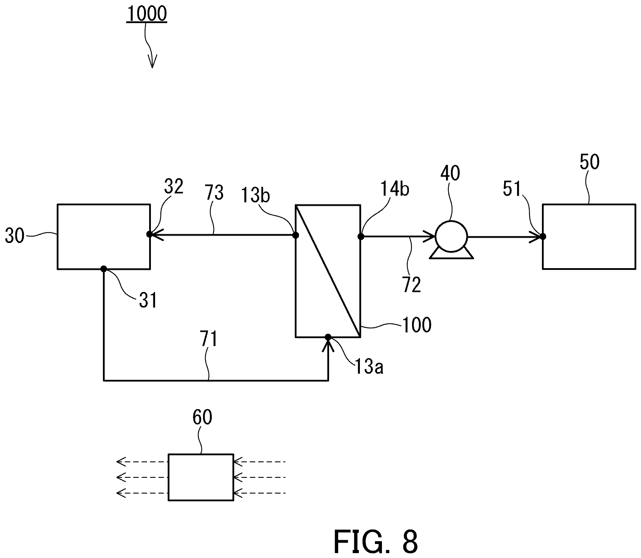

FIG. 8 is a schematic configuration diagram showing an example of a membrane separation system 1000 of Embodiment 1. As shown in FIG. 8, the membrane separation system 1000 of the present embodiment includes the above-mentioned membrane separation device 100, 101, 111, 121, 102 or 103 as the membrane separation device. Hereinafter and in FIG. 8, the membrane separation device 100, 101, 111, 121, 102 or 103 is collectively referred to as the membrane separation device 100 for convenience. The membrane separation system 1000 can carry out the above-mentioned operating method for the membrane separation device 100.

In the membrane separation system 1000, the pervaporation membrane 11 is a membrane (a concentration membrane) that allows the organic compound contained in the fermented liquid S to preferentially permeate therethrough.

The membrane separation system 1000 further includes a tank 30 in addition to the membrane separation device 100. The tank 30 stores the fermented liquid S to be supplied to the membrane separation device 100. The tank 30 is typically a fermenter for generating the organic compound by fermentation of a carbon source by a microorganism.

The membrane separation system 1000 may further include a decompression device 40. The decompression device 40 can decompress the inside of the permeation space 14 of the membrane separation device 100. Preferably, the decompression device 40 is a vacuum device such as a vacuum pump. The vacuum pump is typically a gas transport vacuum pump, and a reciprocating vacuum pump and a rotary vacuum pump, etc. can be mentioned. Examples of the reciprocating vacuum pump include a diaphragm vacuum pump and a rocking piston vacuum pump. Examples of the rotary vacuum pump include: a liquid seal pump; an oil rotary pump (a rotary pump); a mechanical booster pump; and various kinds of dry pumps such as a roots dry pump, a claw dry pump, a screw dry pump, a turbo dry pump, and a scroll dry pump. The pump as the decompression device 40 may include a variable speed mechanism for changing a rotational speed, etc. An example of the variable speed mechanism is an inverter that drives a motor of the pump. By controlling the rotational speed, etc. of the pump by the variable speed mechanism, it is possible to adjust properly a pressure in the feed space 13 of the membrane separation device 100.

The membrane separation system 1000 may further include a recovery unit 50 for recovering the permeated fluid S1. The recovery unit 50 recovers the permeated fluid S1 delivered from the membrane separation device 100 and can, for example, store the permeated fluid S1. The recovery unit 50 is, for example, a tank that stores the permeated fluid S1.

The membrane separation system 1000 further includes a fermented liquid feed passage 71, a permeated fluid discharge passage 72, and a non-permeated fluid discharge passage 73.

The fermented liquid feed passage 71 is a passage connected to a fermented liquid outlet (an outlet 31) of the tank 30 and a fermented liquid inlet (the inlet 13a) of the membrane separation device 100 and configured to supply the fermented liquid S from the tank 30 to the membrane separation device 100. The fermented liquid feed passage 71 may be provided with a pump that controls a flow rate of the fermented liquid S, and may be provided with a sensor for measuring the content of the organic compound in the fermented liquid S.

The permeated fluid discharge passage 72 is a passage connected to a permeated fluid outlet (the outlet 14b) of the membrane separation device 100 and a permeated fluid inlet (an inlet 51) of the recovery unit 50 and configured to deliver the permeated fluid S1 from the membrane separation device 100 to the recovery unit 50. The permeated fluid discharge passage 72 may be provided with a sensor for measuring the content of the organic compound in the permeated fluid S1.

The non-permeated fluid discharge passage 73 is a passage connected to a non-permeated fluid outlet (the outlet 13b) of the membrane separation device 100 and configured to discharge the non-permeated fluid S2 from the membrane separation device 100. The non-permeated fluid discharge passage 73 may be provided with a sensor for measuring the content of the organic compound in the non-permeated fluid S2.

The non-permeated fluid discharge passage 73 may be connected to a non-permeated fluid inlet (an inlet 32) of the tank 30 and configured to deliver the non-permeated fluid S2 to the tank 30. That is, the membrane separation system 1000 may be configured to allow the non-permeated fluid S2 to be mixed with the fermented liquid S in the tank 30 and circulate through the fermented liquid feed passage 71 and the non-permeated fluid discharge passage 73. In the case where the non-permeated fluid S2 is delivered to the tank 30, the fermented liquid S is mixed with the non-permeated fluid S2 and the content of the organic compound in the fermented liquid S decreases in the tank 30. In the case where the tank 30 is a fermenter, a decrease in the content of the organic compound in the fermented liquid S can inhibit the fermentation by a microorganism from stopping, thereby making it possible to produce the fermented product continuously.

The permeated fluid discharge passage 72 may be further provided with a condensation unit for condensing the permeated fluid S1. The condensation unit is, for example, a heat exchanger for cooling the permeated fluid S1. The heat exchanger makes it possible to cool and condense the permeated fluid S1 that is a gas. The heat exchanger is, for example, a gas-liquid heat exchanger that causes heat exchange between a cooling medium, such as an antifreeze, and the permeated fluid S1 that is a gas. The condensation unit may be positioned between the membrane separation device 100 and the decompression device 40 (upstream of the decompression device 40), or between the decompression device 40 and the recovery unit 50 (downstream of the decompression device 40).

The membrane separation system 1000 may further include a controller 60 that controls each member of the membrane separation system 1000. The controller 60 is, for example, a DSP (Digital Signal Processor) including an A/D conversion circuit, an input/output circuit, an arithmetic circuit, a storage device, etc. A program for operating properly the membrane separation system 1000 is stored in the controller 60. For example, the controller 60 can control behaviors of the decompression device 40 and the like and switch between the operation of membrane separation and the washing operation.

Each passage of the membrane separation system 1000 is composed of, for example, a metal or resin pipe unless otherwise noted.

In the membrane separation device 100 used for the membrane separation system 1000, the pervaporation membrane 11 preferably includes a silicone resin. The pervaporation membrane 11 including a silicone resin is suitable for concentrating the organic compound contained in the fermented liquid S, that is, suitably used for concentration.

### <Modification of membrane separation device included in membrane separation system>

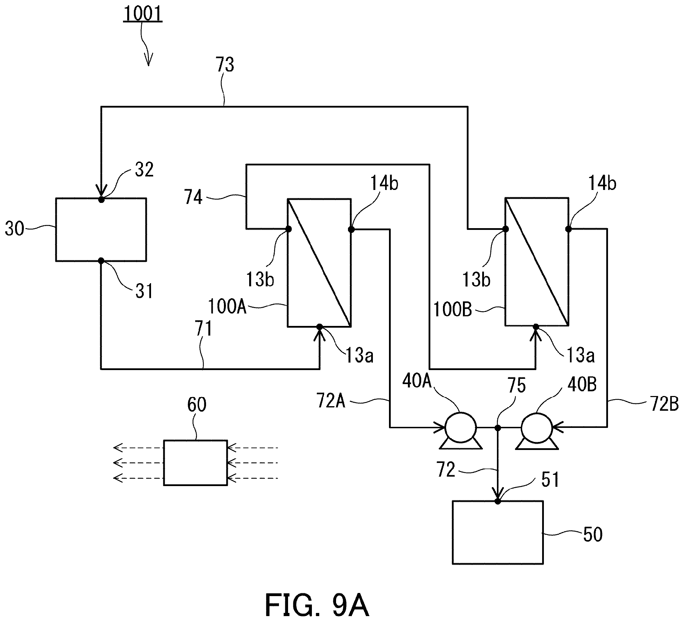

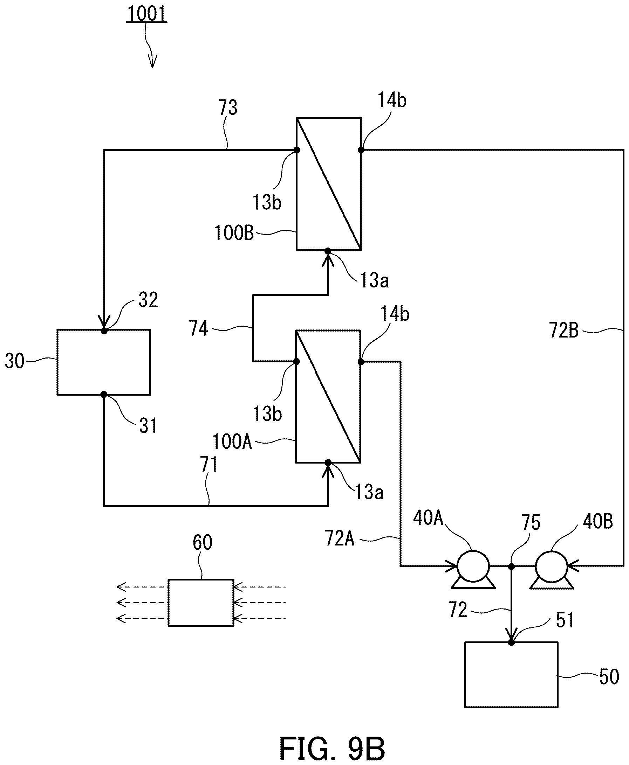

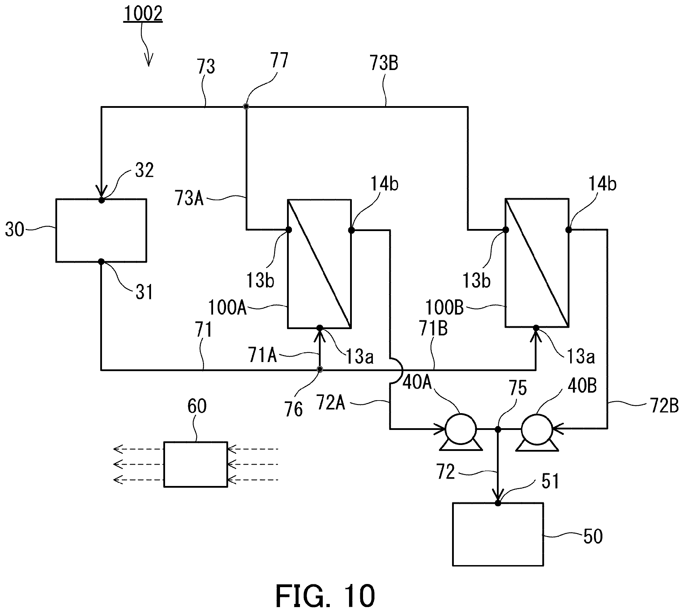

The membrane separation system 1000 of the present embodiment may include a plurality of the membrane separation devices 100, and the plurality of the membrane separation devices 100 may be connected to each other in series or in parallel. In the present description, the phrase "a plurality of the membrane separation devices 100 are connected to each other in series" refers to a configuration in which a plurality of the membrane separation devices 100 are connected to each other in such a manner that the fermented liquid S (the non-permeated fluid S2) discharged from the feed space 13 of the membrane separation device 100 that precedes is supplied to the feed space 13 of the membrane separation device 100 that follows the preceding one. The phrase "a plurality of the membrane separation devices 100 are connected to each other in parallel" refers to a configuration in which a plurality of the membrane separation devices 100 are connected to each other in such a manner that the fermented liquid S delivered from the tank 30 is supplied to the feed space of each of the plurality of the membrane separation devices 100. The number of the membrane separation devices 100 in the membrane separation system 1000 is, for example, but not particularly limited to, 2 to 5. Hereinafter, Modifications of the membrane separation system 1000 will be explained in detail by reference to FIG. 9A, FIG. 9B, and FIG. 10.

### (Modification 1)

FIG. 9A is a schematic configuration diagram showing Modification 1 of the membrane separation system 1000 of the present embodiment. A membrane separation system 1001 of Modification 1 includes two membrane separation devices 100A and 100B connected to each other in series. The membrane separation devices 100A and 100B are connected to each other with pipes. The membrane separation system 1001 has the same configuration as that of the membrane separation system 1000, except that the membrane separation system 1001 includes the two membrane separation devices 100A and 100B, and so on. Therefore, the elements common between the above-mentioned membrane separation system 1000 and the membrane separation system 1001 of Modification 1 are denoted by the same reference numerals, and the description of such elements may be omitted. That is, the description of one embodiment is applicable to the other embodiment unless technical inconsistency occurs. Furthermore, the features of the embodiments may be combined with each other unless technical inconsistency occurs.

As described above, the membrane separation devices 100A and 100B are connected to each other in series in the membrane separation system 1001. Specifically, the membrane separation system 1001 further includes a connection passage 74 that connects the membrane separation devices 100A and 100B to each other. The connection passage 74 is connected to the feed space outlet 13b of the membrane separation device 100A and the feed space inlet 13a of the membrane separation device 100B. Note that the fermented liquid feed passage 71 is connected to the feed space inlet 13a of the membrane separation device 100A, and the non-permeated fluid discharge passage 73 is connected to the feed space outlet 13b of the membrane separation device 100B.

The permeated fluid discharge passage 72 has a first portion 72A and a second portion 72B. The first portion 72A is connected to the permeation space outlet 14b of the membrane separation device 100A, and the second portion 72B is connected to the permeation space outlet 14b of the membrane separation device 100B. The first portion 72A joins the second portion 72B at a joining point 75.

The permeated fluid discharge passage 72 is provided with two decompression devices 40A and 40B, for example. The decompression device 40A is positioned between the membrane separation device 100A and the joining point 70, and can decompress the inside of the permeation space 14 of the membrane separation device 100A. The decompression device 40B is positioned between the membrane separation device 100B and the joining point 70, and can decompress the inside of the permeation space 14 of the membrane separation device 100B. However, the permeated fluid discharge passage 72 may be provided with one decompression device, and the decompression device may be positioned between the joining point 70 and the recovery unit 50. That is, one decompression device may be shared by the membrane separation devices 100A and 100B.

Note that in the membrane separation system 1001, a pervaporation membrane 11A of the membrane separation device 100A may be the same as or different from a pervaporation membrane 11B of the membrane separation device 100B except for its membrane area. A ratio of a membrane area (m²) of the pervaporation membrane 11A with respect to a total value (m²) of the membrane area of the pervaporation membrane 11A and a membrane area of the pervaporation membrane 11B is not particularly limited.

In one example, the membrane separation system 1001 can be operated by the following method. First, a pump (not shown) is activated and the fermented liquid S is supplied from the tank 30 to the membrane separation device 100A , and the fermented liquid S is further supplied to the membrane separation device 100B from the membrane separation device 100A. Thereby, each of the pervaporation membrane 11A of the membrane separation device 100A and the pervaporation membrane 11B of the membrane separation device 100B can be brought into contact with the fermented liquid S.

Next, the permeation space 14 of the membrane separation device 100A is decompressed via the permeation space outlet 14b, and the permeation space 14 of the membrane separation device 100B is decompressed via the permeation space outlet 14b. Thereby, the operation of membrane separation can be executed by each of the membrane separation devices 100A and 100B, and the permeated fluid S1 can be obtained from each of the membrane separation devices 100A and 100B. Note that the fermented liquid S (the non-permeated fluid S2) processed by the membrane separation device 100A is delivered to the membrane separation device 100B via the connection passage 74 and further processed by the membrane separation device 100B.

Next, the pressure in the permeation space 14 of at least one of the membrane separation devices 100A and 100B is increased and the operation of membrane separation is ended.

In the membrane separation system 1001, both of the plurality of the membrane separation devices 100 may be arranged in the horizontal direction and connected to each other in series as shown in FIG. 9A. Such a configuration makes it possible to sufficiently secure stability of each of the membrane separation devices 100.

In the membrane separation system 1001, the plurality of the membrane separation devices 100 may be arranged one above the other in the vertical direction and connected to each other in series as shown in FIG. 9B. Such a configuration makes it possible to reduce the number of the pipes to be used for connection.

### (Modification 2)

FIG. 10 is a schematic configuration diagram showing Modification 2 of the membrane separation system 1000 of the present embodiment. A membrane separation system 1002 of Modification 2 includes the two membrane separation devices 100A and 100B connected to each other in parallel. The membrane separation devices 100A and 100B are connected to each other with pipes. The membrane separation system 1002 has the same configuration as that of the membrane separation system 100, except that the membrane separation system 1002 includes the two membrane separation devices 100A and 100B, and so on.

As described above, in the membrane separation system 1002, the membrane separation devices 100A and 100B are connected to each other in parallel. Specifically, the fermented liquid feed passage 71 has a first portion 71A and a second portion 71B. The first portion 71A of the fermented liquid feed passage 71 is connected to the feed space inlet 13a of the membrane separation device 100A, and the second portion 71B is connected to the feed space inlet 13a of the membrane separation device 100B. The second portion 71B is branched from the first portion 71A at a branch point 76. The branch point 76 is positioned between the tank 30 and the membrane separation device 100A.

Furthermore, the non-permeated fluid discharge passage 73 has a first portion 73A and a second portion 73B. The first portion 73A of the non-permeated fluid discharge passage 73 is connected to the feed space outlet 13b of the membrane separation device 100A, and the second portion 73B is connected to the feed space outlet 13b of the membrane separation device 100B. The first portion 73A joins the second portion 73B at a joining point 77. The joining point 77 is positioned between the tank 30 and the membrane separation device 100A, for example.

As in the membrane separation system 1001 of Modification 1, the permeated fluid discharge passage 72 has the first portion 72A and the second portion 72B. The first portion 72A is connected to the permeation space outlet 14b of the membrane separation device 100A, and the second portion 72B is connected to the permeation space outlet 14b of the membrane separation device 100B. The first portion 72A joins the second portion 72B at the joining point 75.

The permeated fluid discharge passage 72 is provided with the two decompression devices 40A and 40B, for example. The decompression device 40A is positioned between the membrane separation device 100A and the joining point 75, and can decompress the inside of the permeation space 14 of the membrane separation device 100A. The decompression device 40B is positioned between the membrane separation device 100B and the joining point 75, and can decompress the inside of the permeation space 14 of the membrane separation device 100B. However, the permeated fluid discharge passage 72 may be provided with one decompression device, and the decompression device may be positioned between the joining point 75 and the recovery unit 50. That is, one decompression device may be shared by the membrane separation devices 100A and 100B.

In the membrane separation system 1002, the pervaporation membrane 11A of the membrane separation device 100A may be the same as or different from the pervaporation membrane 11B of the membrane separation device 100B. The ratio of the membrane area (m²) of the pervaporation membrane 11A with respect to the total value (m²) of the membrane area of the pervaporation membrane 11A and the membrane area of the pervaporation membrane 11B is not particularly limited.

In one example, the membrane separation system 1002 can be operated by the following method. First, a pump (not shown) is activated and the fermented liquid S is supplied from the tank 30 to each of the membrane separation devices 100A and 100B. Thereby, each of the pervaporation membrane 11A of the membrane separation device 100A and the pervaporation membrane 11B of the membrane separation device 100B can be brought into contact with the fermented liquid S.

Next, the permeation space 14 of the membrane separation device 100A is decompressed via the permeation space outlet 14b, and the permeation space 14 of the membrane separation device 100B is decompressed via the permeation space outlet 14b. Thereby, the operation of membrane separation can be executed by each of the membrane separation devices100A and 100B, and the permeated fluid S1 can be obtained from each of the membrane separation devices 100A and 100B.

Next, the pressure in the permeation space 14 of at least one of the membrane separation devices 100A and 100B is increased and the operation of membrane separation is ended.

### <Embodiment 2 of membrane separation system>

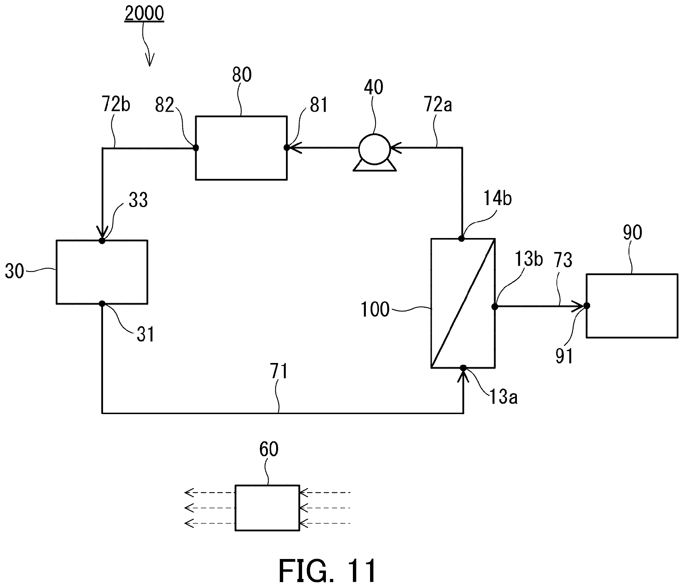

FIG. 11 is a schematic configuration diagram showing an example of a membrane separation system 2000 of Embodiment 2. As shown in FIG. 11, the membrane separation system 2000 of the present embodiment includes the above-mentioned membrane separation device 100, 101, 111, 121, 102 or 103 as the membrane separation device. Hereinafter and in FIG. 11, the membrane separation device 100, 101, 111, 121, 102 or 103 is collectively referred to as the membrane separation device 100 for convenience. Note that the elements common between the above-mentioned membrane separation system 1000 of Embodiment 2 and the membrane separation system 2000 of Embodiment 2 are denoted by the same reference numerals, and the description of such elements may be omitted.

In the membrane separation system 2000, the pervaporation membrane 11 is a membrane (a dehydration membrane) that allows water contained in the fermented liquid S to preferentially permeate therethrough.

The membrane separation system 2000 may further include a recovery unit 80 for recovering the permeated fluid S1. The recovery unit 80 recovers the permeated fluid S1 delivered from the membrane separation device 100 and can, for example, store the permeated fluid S1. The recovery unit 80 is, for example, a tank that stores the permeated fluid S1.

The membrane separation system 2000 further includes the fermented liquid feed passage 71, a first permeated fluid discharge passage 72a, and the non-permeated fluid discharge passage 73.

The fermented liquid feed passage 71 is a passage connected to the fermented liquid outlet (the outlet 31) of the tank 30 and the fermented liquid inlet (the inlet 13a) of the membrane separation device 100 and configured to supply the fermented liquid S from the tank 30 to the membrane separation device 100. The fermented liquid feed passage 71 may be provided with a pump that controls the flow rate of the fermented liquid S, and may be provided with a sensor for measuring the content of the organic compound in the fermented liquid S. The fermented liquid feed passage 71 may be provided with a filter for removing the microorganism that is contained in the fermented liquid S and that is associated with the generation of the fermented product.

The first permeated fluid discharge passage 72a is a passage connected to the permeated fluid outlet (the outlet 14b) of the membrane separation device 100 and a permeated fluid inlet (an inlet 81) of the recovery unit 80 and configured to deliver the permeated fluid S1 from the membrane separation device 100 to the recovery unit 80. The first permeated fluid discharge passage 72a may be provided with the decompression device 40, and a sensor for measuring the content of the organic compound in the permeated fluid S1.

The first permeated fluid discharge passage 72a may be further provided with a condensation unit for condensing the permeated fluid S1. The condensation unit is, for example, a heat exchanger for cooling the permeated fluid S1. The heat exchanger makes it possible to cool and condense the permeated fluid S1 that is a gas. The heat exchanger is, for example, a gas-liquid heat exchanger that causes heat exchange between a cooling medium, such as an antifreeze, and the permeated fluid S1 that is a gas. The condensation unit may be positioned between the membrane separation device 100 and the decompression device 40 (upstream of the decompression device 40), or between the decompression device 40 and the recovery unit 80 (downstream of the decompression device 40).

The membrane separation system 2000 may further include a second permeated fluid discharge passage 72b. The second permeated fluid discharge passage 72b may be connected to a permeated fluid outlet (an outlet 82) of the recovery unit 80 and a permeated fluid inlet (an inlet 33) of the tank 30 and configured to deliver the permeated fluid S1 to the tank 30. That is, the membrane separation system 2000 may be configured to allow the permeated fluid S1 to be mixed with the fermented liquid S in the tank 30 and circulate through the fermented liquid feed passage 71, the first permeated fluid discharge passage 72a, and the second permeated fluid discharge passage 72b. In the case where the permeated fluid S1 is delivered to the tank 30, the fermented liquid S is mixed with the permeated fluid S1 and the content of the organic compound in the fermented liquid S decreases in the tank 30. In the case where the tank 30 is a fermenter, a decrease in the content of the organic compound in the fermented liquid S can inhibit the fermentation by a microorganism from stopping, thereby making it possible to produce the fermented product continuously.

The non-permeated fluid discharge passage 73 is a passage connected to the non-permeated fluid outlet (the outlet 13b) of the membrane separation device 100 and configured to discharge the non-permeated fluid S2 from the membrane separation device 100. The non-permeated fluid discharge passage 73 may be provided with a sensor for measuring the content of the organic compound in the non-permeated fluid S2.

The membrane separation system 2000 may further include a recovery unit 90 for recovering the non-permeated fluid S2. The non-permeated fluid discharge passage 73 may be connected to a non-permeated fluid inlet (an inlet 91) of the recovery unit 90. The recovery unit 90 recovers the non-permeated fluid S2 delivered from the membrane separation device 100 and can, for example, store the non-permeated fluid S2. The recovery unit 90 is, for example, a tank that stores the non-permeated fluid S2. The non-permeated fluid discharge passage 73 may be provided with a filter for removing the microorganism that is contained in the non-permeated fluid S2 and that is associated with the generation of the fermented product.

In the membrane separation device 100 used for the membrane separation system 2000, the pervaporation membrane 11 preferably includes at least one selected from the group consisting of polyimide and zeolite. The pervaporation membrane 11 including at least one selected from the group consisting of polyimide and zeolite is suitable for removing water contained in the fermented liquid S, that is, suitably used for dehydration.

### <Modification of membrane separation device included in membrane separation system>

As in the case with the membrane separation system 1000 of Embodiment 1, the membrane separation system 2000 of the present embodiment may include a plurality of the membrane separation devices 100, and the plurality of the membrane separation devices 100 may be connected to each other in series or in parallel.

### EXAMPLES

Hereinafter, the present invention will be described in more detail by way of Examples and Comparative Example, but the present invention is not limited to these examples.

### (Example 1)

As the membrane separation device of Example 1, a spiral membrane separation device having the same configuration as that of the membrane separation device 101 shown in FIG. 4A was used. In the membrane separation device of Example 1, the tilt angle θ1 was set to 78°. The tilt angle θ3 was set to 90°.

### (Example 2)

As the membrane separation device of Example 2, a spiral membrane separation device having the same configuration as that of the membrane separation device 111 shown in FIG. 4B was used. In the membrane separation device of Example 2, the tilt angle θ1 was set to 32°. The tilt angle θ3 was set to 20°.

### (Example 3)

As the membrane separation device of Example 3, a spiral membrane separation device having the same configuration as that of the membrane separation device 111 shown in FIG. 4B was used. In the membrane separation device of Example 3, the tilt angle θ1 was set to 27°. The tilt angle θ3 was set to 15°.

### (Example 4)

As the membrane separation device of Example 4, a spiral membrane separation device having the same configuration as that of the membrane separation device 111 shown in FIG. 4B was used. In the membrane separation device of Example 4, the tilt angle θ1 was set to 22°. The tilt angle θ3 was set to 10°.

### (Example 5)

As the membrane separation device of Example 5, a spiral membrane separation device having the same configuration as that of the membrane separation device 111 shown in FIG. 4B was used. In the membrane separation device of Example 5, the tilt angle θ1 was set to 17°. The tilt angle θ3 was set to 5°.

### (Example 6)

As the membrane separation device of Example 6, a spiral membrane separation device having the same configuration as that of the membrane separation device 121 shown in FIG. 4C was used. In the membrane separation device of Example 6, the tilt angle θ1 was set to 12°. The tilt angle θ3 was set to 0°.

### (Comparative Example 1)

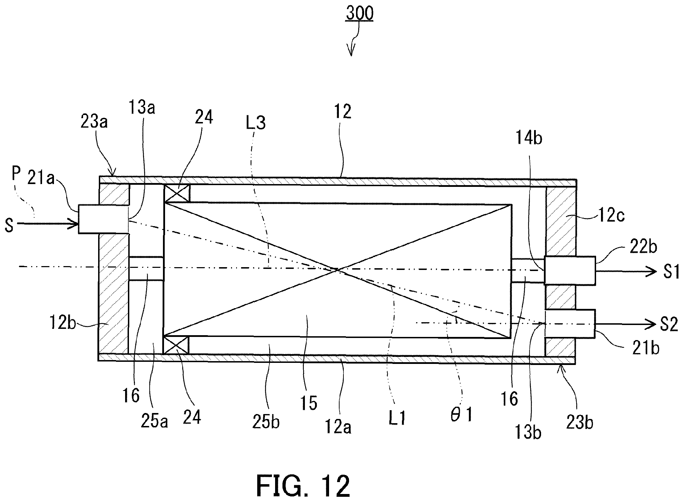

As the membrane separation device of Comparative Example 1, a membrane separation device 300 shown in FIG. 12 was used. The membrane separation device 300 had the same configuration as that of the membrane separation device 121 shown in FIG. 4C, except that the feed space inlet 13a was positioned above the feed space outlet 13b. The elements common between the membrane separation device 300 and the membrane separation device 101 shown in FIG. 4A are denoted by the same reference numerals for convenience. In the membrane separation device of Comparative Example 1, the tilt angle θ1 was set to 12°. The tilt angle θ3 was set to 0°.

### [Production of pervaporation membrane]

First, a pervaporation membrane was produced by the following method. A coating liquid was prepared by mixing 1.650 kg (solids concentration: 30 wt%) of a silicone resin (YSR3022 available from Momentive Performance Materials Japan LLC.), 2.805 kg of toluene, 0.495 kg of a high-silica zeolite (HiSiv 3000 available from UNION SHOWA K.K.), 0.0495 kg of a silicone curing catalyst (YC6831 available from Momentive Performance Materials Japan LLC.), and 0.0495 kg of acetylacetone as a curing retardant. Next, the coating liquid was applied onto a porous support (RS-50 available from Nitto Denko Corporation) having a thickness of 150 µm to obtain a coating (thickness: 500 µm). The coating was heated at 90°C for 4 minutes and then dried to produce a separation functional layer having a thickness of 50 µm. The weight ratio between the silicone resin and the high-silica zeolite was 50:50 in the separation functional layer. A pervaporation membrane was thus obtained.

### [Production of membrane separation device]

A spiral membrane element as shown in FIG. 5 was produced using the produced pervaporation membrane. The membrane element had an outer diameter of 55 mm and a length of 300 mm. The produced membrane element was disposed inside a casing to produce a membrane separation device. The casing had an inner diameter of 62 mm.

### [Evaluation on amount of liquid discharged]

As for the membrane separation device of each of Examples and Comparative Example, the amount of a liquid discharged was evaluated by the following method. Water was used as the liquid to circulate through the membrane separation device. The circulation flow rate was set to 100 g/minute. The liquid was allowed to circulate through the membrane separation device under the above-mentioned conditions so that the membrane element was sufficiently charged with the liquid. Thereafter, the circulation was stopped and the liquid inside the membrane element was discharged. The weight of the liquid discharged was considered as the amount of the liquid discharged. Table 1 shows the results.

**[Table 1]**

| | Feed space inlet 13a is positioned below feed space outlet 13b. | θ1 (°) | θ3 (°) | Amount of liquid discharged (g) |
|---|---|---|---|---|
| Example 1 | Yes | 78 | 90 | 540 |
| Example 2 | Yes | 32 | 20 | 518 |
| Example 3 | Yes | 27 | 15 | 519 |
| Example 4 | Yes | 22 | 10 | 507 |
| Example 5 | Yes | 17 | 5 | 481 |
| Example 6 | Yes | 12 | 0 | 422 |
| Comparative Example 1 | No | 12 | 0 | 201 |

As shown in Table 1, the amount of the liquid discharged was larger when the membrane separation device of each of Examples 1 to 6 was used than when the membrane separation device of Comparative Example 1 was used. That is, a larger amount of the liquid was charged into the membrane element when the membrane separation device of each of Examples 1 to 6 was used than when the membrane separation device of Comparative Example 1 was used. This result reveals that an increase of the local dried solidified area inside the membrane separation device was suppressed by using the membrane separation device in which the feed space inlet 13a was positioned below the feed space outlet 13b. Therefore, it is inferred that it is possible to suppress the growth of an undesirable microorganism inside the membrane separation device by using the membrane separation device in which the feed space inlet 13a is positioned below the feed space outlet 13b.

The membrane separation device of Example 1 had a larger amount of the liquid discharged than that of any of the membrane separation devices of Examples 2 to 6. This result reveals that it is possible to achieve an excellent effect in suppressing an increase of the local dried solidified area inside the membrane separation device by using a spiral membrane separation device having the same configuration as that of the membrane separation device 101 shown in FIG. 4A. The membrane separation device of Example 6 had a larger amount of the liquid discharged than that of the membrane separation device of Comparative Example 1, and was easier to connect and install than the membrane separation devices of Examples 1 to 5. This result reveals that it is possible to improve practicality while exhibiting an effect in suppressing an increase of the local dried solidified area inside the membrane separation device by using a spiral membrane separation device having the same configuration as that of the membrane separation device 121 shown in FIG. 4C. The membrane separation devices of Examples 2 to 5 each had a relatively large amount of the liquid discharged, which was 481 g to 519 g, and were easier to connect and install than the membrane separation device of Example 1. This result reveals that it is possible to achieve an excellent balance between the practicality and the effectiveness in suppressing an increase of the local dried solidified area inside the membrane separation device by using a spiral membrane separation device having the same configuration as that of the membrane separation device 111 shown in FIG. 4B.

### INDUSTRIAL APPLICABILITY

The membrane separation system of the present embodiment is suitable for efficiently separating a volatile organic compound from a fermented liquid containing the organic compound.

## Claims

1. A membrane separation device comprising:
a pervaporation membrane that separates a fermented liquid containing a volatile organic compound into a permeated fluid and a non-permeated fluid;
a feed space and a permeation space separated from each other by the pervaporation membrane;
a feed space inlet for supplying the fermented liquid to the feed space; and
a feed space outlet for discharging the non-permeated fluid from the feed space, wherein
the feed space inlet is positioned below the feed space outlet.

2. The membrane separation device according to claim 1, further comprising:
a central tube having a through hole; and
a membrane leaf that has the pervaporation membrane and is wound around the central tube.

3. The membrane separation device according to claim 2, wherein the central tube extends from a lower side to an upper side.

4. The membrane separation device according to claim 1, wherein a tilt angle of a virtual straight line connecting the feed space inlet to the feed space outlet with respect to a level surface is 5° or more and 90° or less.

5. The membrane separation device according to claim 1, further comprising a permeation space outlet for discharging the permeated fluid from the permeation space, wherein
the permeation space outlet is positioned above the feed space inlet.

6. The membrane separation device according to claim 1, further comprising a fluid discharge outlet connected to the feed space, wherein
the fluid discharge outlet is positioned below the feed space outlet.

7. The membrane separation device according to claim 1, wherein a content of the organic compound in the permeated fluid is higher than a content of the organic compound in the fermented liquid.

8. The membrane separation device according to claim 1, wherein the fermented liquid is separated into the permeated fluid and the non-permeated fluid in a state in which the feed space is filled with the fermented liquid.

9. A membrane separation system comprising the membrane separation device according to any one of claims 1 to 8.

10. The membrane separation system according to claim 9, further comprising a tank that stores the fermented liquid to be supplied to the membrane separation device.

11. The membrane separation system according to claim 10, further comprising:
a fermented liquid feed passage connecting the tank to the feed space inlet; and
a non-permeated fluid discharge passage connecting the feed space outlet to the tank.

12. The membrane separation system according to claim 10, wherein the tank is a fermenter for generating the organic compound.

13. The membrane separation system according to claim 9, wherein
the membrane separation system includes a plurality of the membrane separation devices, and
the plurality of the membrane separation devices are connected to each other in series or in parallel.

14. A method for operating a membrane separation device including:
a pervaporation membrane that separates a fermented liquid containing a volatile organic compound into a permeated fluid and a non-permeated fluid;
a feed space and a permeation space separated from each other by the pervaporation membrane;
a feed space inlet for supplying the fermented liquid to the feed space; and
a feed space outlet for discharging the non-permeated fluid from the feed space,
the feed space inlet being positioned below the feed space outlet,
the method comprising:
supplying the fermented liquid to the membrane separation device from the feed space inlet; and
separating the fermented liquid into the permeated fluid and the non-permeated fluid with the pervaporation membrane.
